# EUROPEAN PATENT APPLICATION

(11) **EP 1 203 676 A1**
(43) Date of publication of application: **08.05.2002**
(21) Application number: 00830729.0
(22) Date of filing: 02.11.2000
(51) Int. Cl.: B60G 5/03, B62D 61/12

(54) **Method for variation of the load distribution on driving wheels of operating vehicles and device that carries out this method**

(71) Applicant: Kmet, Stefano, 19039 Sarzana (SP) (IT)
(72) Inventor: Kmet, Stefano, 19039 Sarzana (SP) (IT)
(74) Representative: Celestino, Marco

(57) **Abstract**

A method and a device (20) for variation of the load distribution on driving wheels (16,17) of operating vehicles (1), of the type comprising a driving unit (2), a frame (3) and a first (5) and a second (6) driven axle coupled as a tandem group (4) by means of resilient suspensions (7). Between the first driven axle (5) and the frame (3) at least a pneumatic suspension (21) is arranged communicating with a reservoir (26) of pressurised air. The pressure in the pneumatic suspension (21) loads the first axle (5) and unloads in part the second axle (6), transferring thus on the first axle (5) part of the load that is born by said second axle (6). The reservoir (26) of pressurised air absorbs pressure peaks in the suspension (21) in presence of load peaks on the first axle (5). The suspension (21) can be arranged centred between the box of the differential (12) of the first axle (5) and the frame (3). The air reservoir (26) is the same reservoir that feeds other servomechanisms of the vehicle (1), whereby the ratio between the volume of the pneumatic suspension (21) and the reservoir (26) is set between 1/20 and 1/40. The circuit (22) that connects the pneumatic suspension, which is advantageously a bellows pad (21), has valves (24) switched (25) by the driver that selectively connects the suspension (21) with the reservoir (26) or with an air bleed valve (27). The circuit has ducts (22) of diameter sufficient to allow a quick passage of air from the suspension (21) to the reservoir (26).

## Description

### Field of the invention

The present invention relates to heavy operating vehicles, for example off-highway trucks for carrying loads in yards, in particular on slippery paths, for example steep or muddy paths etc.

### Background of the invention

Operating vehicles such as off-highway trucks are known that carry loads on slopes. For example, off-highway trucks that bring material coming from quarries go along dirt roads, often slope roads, and proceed unloaded uphill and loaded downhill. In other cases, off-highway trucks must go down slopes into building work excavations on bad surface roads.

Off-highway trucks of this kind have often two rear driven axles supported on the frame by means of leaf spring suspensions. Such leaf spring suspensions are pivotally connected to the frame and can have small swing between two limit stops present on the frame. The whole of the two driven axles and of the relative suspensions on the frame is normally said tandem.

The leaf spring suspensions balance the load on the two driven axles of the tandem allowing an appropriate grip of the wheels on the ground. The load on the truck assures a strong grip on the ground to the eight driving wheels.

On the other hand, without load on the vehicle the grip necessary may be lacking, since the weight of the loadless vehicle is not sufficient to press the tires against the ground. Therefore, a truck that loadless covers uphill a steep slope, or a muddy path or in any case a slippery road, may have troubles to proceed. In other words, the traction of the driven axles may not be enough for lack of grip, since the load orthogonal to the road is balanced by the tandem with respect to all wheels.

In these cases, the differential gears that distribute the torque to all the wheels of the system may be partially or totally locked to avoid that one or more of it can slip.

Where this technique is not sufficient, hydraulic devices are known for adjusting the load distribution on the driven axles. These devices provide normally hydraulic actuators that cause a rotation of the leaf springs supports about the pins of connection to the frame by means of a drive operated by the driver that switches on and off the electrovalve of a hydraulic circuit. Then, on one of the two driven axles a much higher weight is loaded with respect to the other, up to supporting all the rear load of the vehicle, thus increasing remarkably the grip. As a consequence of that, if the rear load of the truck rests on a single driven axle, on the other axle the forces that depend on the weight are practically doubled, and then the grip to the ground of its driving wheels is increased.

The main drawback of these hydraulic devices, in addition to their high cost, is the low reliability with time, for break of brackets and oil leakage. This is due to the fact that the device cannot dampen the road reaction that the axle that contacts the ground loads on the raised axle that is locked by the hydraulic pistons.

By forcing the load on a single axle a strong stress bears on the relative differential. In fact the supports are sized to operate as a tandem, i.e. with the differential gears of the two axles that bear the load together. If a single differential gear is loaded, the other differential gear works loadless and can break owing to the high inertia of the wheels of the relative axle. Moreover, the repair of broken differential gears is very expensive, in addition to causing problems and losses owing to the stop of the vehicle.

Furthermore independent hydraulic suspensions of the two driven axles are known having each a hydraulic system of distribution of the load. Such systems, however, require a continuous electronic control of the loads in order to fit quickly to the various cases, and are as a consequence much more expensive than the leaf spring systems.

### Summary of the invention

It is therefore object of the present invention to provide a method for variation of the load distribution on driving wheels of operating vehicles that allow a quick and easy change of the load on the two driven axles without that shocks break the relative differentials.

It is another object of the present invention to provide a method for variation of the load distribution on driving wheels of operating vehicles that is easy to carry out without providing substantial changes to the suspension and to the drive transmission means.

It is a further object of the present invention to provide a device for variation of the load distribution on driving wheels of operating vehicles that can be fixed on both existing vehicles and new vehicles in a easy and not expensive way.

These and other objects are achieved by the method according to the invention, whose characteristic is that between the front axle and the frame at least a pneumatic suspension is arranged that can be linked to a reservoir of pressurised air, the air pressure in the pneumatic suspension loading an axle and unloading the other, thus transferring most of the load on a single axle.

Preferably the loaded axle of the suspension of the operating vehicles is the front axle whereas the unloaded axle is the rear axle. A similar configuration is possible by arranging the suspension on the rear axle, even if with a less advantageous position of the barycentre of the vehicle.

The reservoir of pressurised air, of much higher volume than the pneumatic suspension, e.g. a bellows pad, dampens pressure peaks in the suspension in presence of load peaks on the front axle, owing for example to bad road surface.

Advantageously, the pneumatic suspension is arranged centred between the box of the differential of the front axle and the frame of the vehicle.

According to another aspect of the invention, a device for variation of the load distribution on driving wheels of operating vehicles comprises:
- at least a pneumatic suspension arranged between the front axle and the frame;
- at least a reservoir of pressurised air,
- a pneumatic circuit with the valve means for carrying out a pneumatic connection of said suspension with said reservoir, said valve means being movable between a first position wherein said suspension is in communication with said reservoir and a second position wherein said suspension is separated from said reservoir.

Preferably, the reservoir of pressurised air is the same reservoir of the servomechanisms of the truck (brakes, gear, etc.).

In a preferred embodiment, the suspension is a pneumatic bellows pad.

The reservoir of pressurised air has in any case volume from 20 to 40 times more than the volume of the inflated bellows pad.

Advantageously, the pneumatic circuit comprises a bleed valve that allows the outlet of air when said valve means is in said second position and keeps in said suspension an amount of air that does not exceed a predetermined maximum pressure.

### Brief description of the drawings

Further characteristics and the advantages of the method for variation of the load distribution on driving wheels of operating vehicles will be made clearer with the following description of an embodiment thereof, exemplifying but not limitative, with reference to the attached drawings, wherein:
- figure 1 shows a sectional longitudinal view of an off-road truck;
- figure 2 shows a top plan view of the truck of figure 1;
- figure 3 shows a perspective view of a couple of driven axles arranged as a tandem of the truck of figure 1;
- figure 4 is a diagrammatical view of the pneumatic circuit of an apparatus for variation of the load distribution on the wheels according to the invention;
- figure 5 is a partial elevational view of the tandem and of the driven axles of the truck of figure 1 on which an apparatus for variation of the load distribution on the wheels according to the invention is mounted;
- figure 6 is a top plan view of the tandem of driven axles of figure 5.

### Description of a preferred embodiment

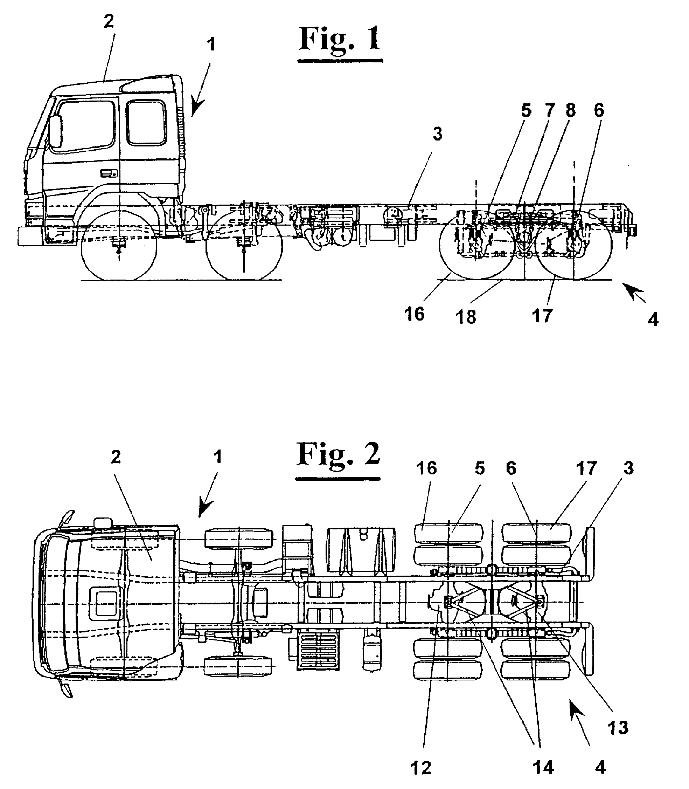

With reference to figure 1, a truck 1 that can be used as off-road vehicle comprises a driving cab 2, a frame 3 and a tandem unit 4 comprising two rear driven axles 5 and 6.

Driven axles 5 and 6 are energised by driving cab 2 by means a not shown driveline.

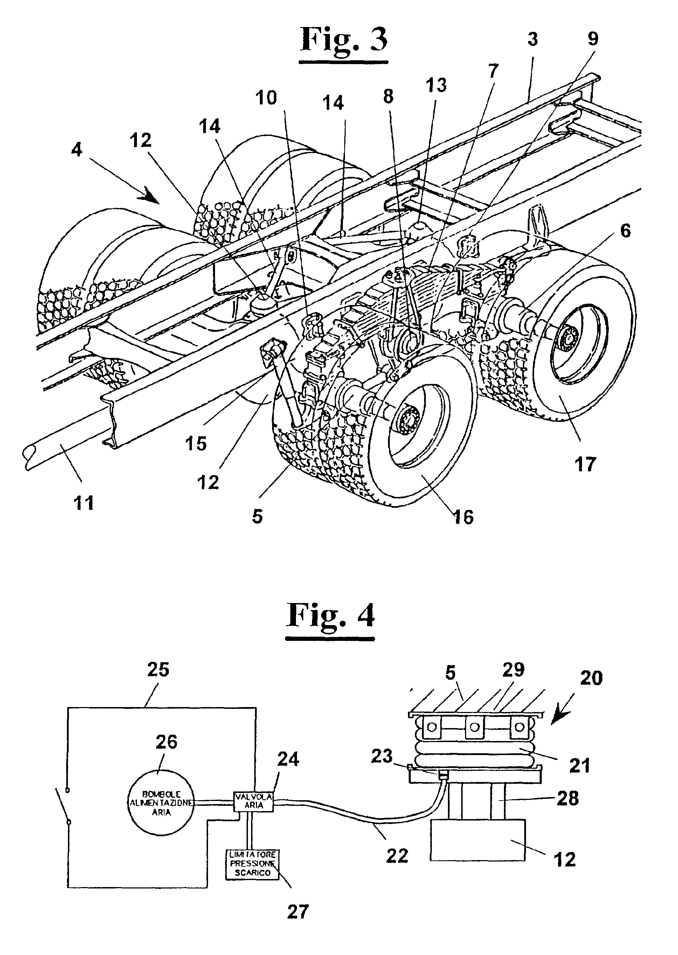

With reference also to figure 3, driven axles 5 and 6 are supported by frame 3 through leaf spring suspensions 7 that are pivotally connected to frame 3 on bearings 8. Leaf spring suspensions 7 may have limited fluctuation between two limit stops 9 and 10 provided on frame 3, for compensating road bumps.

In figure 3 are also shown the longitudinal transmission shaft 11, the front and rear differential gears 12 and 13, and linking arms 14, which are pivotally connected to differential gears 12 and 13 for reducing the degrees of freedom of axles 5 and 6 when they rotate along with leaf springs 7. As further attenuation to bumps on leaf springs 7 passive shock absorbers 15 are provided.

The load on truck 1 is distributed by leaf spring suspensions 7 in a substantially balanced way to driven axles 5 and 6 of tandem 4 allowing an appropriate grip of wheels 16 and 17 on the ground 18. For distributing instead the load in a uniform but not balanced way on wheels 16 and 17 of the two axles 5 and 6 a device 20 for variation of the load distribution according to the present invention is provided.

The device 20 is shown in figure 4 and comprises a bellows pad 21 inflatable through an air duct 22 connected to an inlet 23. A three-way valve 24 is electrically driven by a circuit 25. In a first position valve 24 connects duct 22 to a pressurised reservoir 26. This reservoir is for example that used for operating servo-systems on the vehicle, for example brakes, gear, etc.. Air inflates bellows pad 21 up to the pressure of reservoir 26. In a second position valve 24 connects the duct 22 with a bleed valve 27.

Bellows pad 21 is connected at bottom to the box of the differential gear 12 of front axle 5 by means of a support 28, whereas is mounted at top to frame 5 by means of a plate 29.

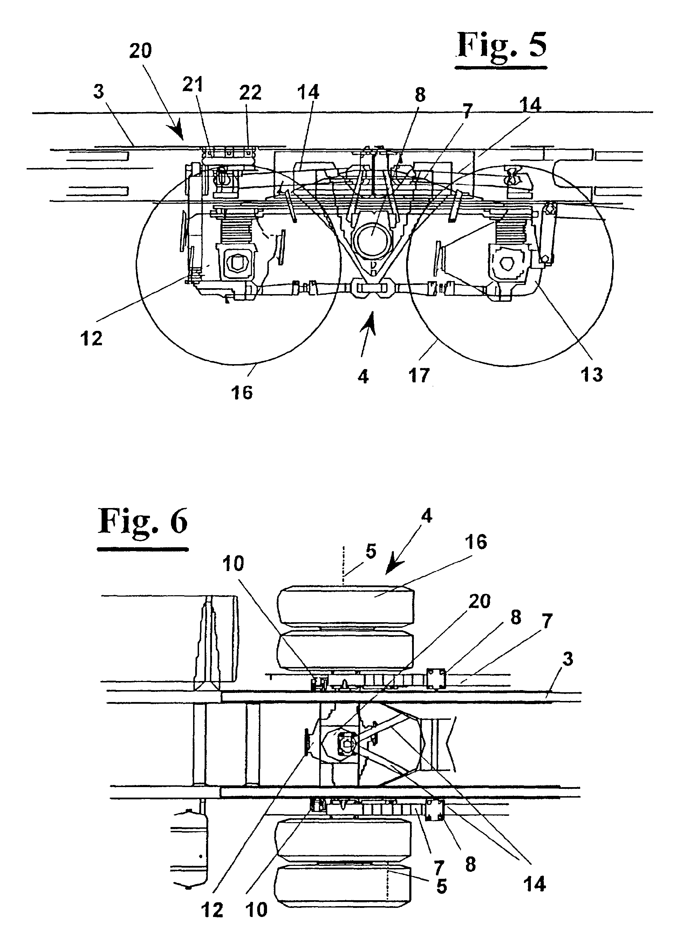

Bellows pad 21 is arranged on tandem 4 as shown in figures 5 and 6.

The apparatus of variation of the load distribution 20 is preferably arranged between front axle 5 and frame 3 and has the function of pneumatic suspension at fixed pressure since it is connected to reservoir 26 of pressurised air, which normally is set about at 8-10 bar.

More precisely, the pressurised air in reservoir 26, if freed by the driver through valve 24 and loads front axle 5 through bellows pad 21, thus unloading the support 8 of tandem 4 and then rear axle 6. This way it transmits most of the load only to axle 5. Axle 6 still contacts the ground, even if with a load that is less than half the load that it normally holds.

Therefore, the more load on axle 5 increases the more friction with ground of its wheels 16 increases, allowing a stronger grip.

Furthermore the reservoir of pressurised air 26 dampens the pressure peaks that bear on suspension 20 in presence of load peaks on front axle 5 due to road bumps.

More precisely, the direct connection to reservoir 26 of pressurised air through valve 24 and ducts 22 has a cross section that is wider enough to allow a quick passage of air, whereby the stress caused by bumps is absorbed by the passage of air. Then, shocks on bellows pad 21 transmit to axle 5 only a part of the forces that depend from the mass of the vehicle. This is due mainly to the volume ratio between bellows pad 21 and air reservoir 26, normally about 1/30 and not much variable according to the type of truck. Therefore, when the bellows pad is completely compressed by the load, the pressure varies at most of a factor 1+1/30 with respect to the case in which bellows pad is fully inflated. The pressurised air in reservoir 26, which as already said is normally about 8-10 bar, with shocks on the bellows pad can change at the maximum of this factor.

In figures 4 and 5 the pneumatic suspension 20 according to the invention is arranged centred between the box of differential gear 12 of front axle 5 and frame 3 of the truck. However, it can be arranged not centred, according to the geometric position of the frame with respect to the differential gear.

Bleed valve 27 allows the outlet of air when valve 24 is in the second position, i.e. it is shut and prevents the passage of pressurised air. This way, in bellows pad 21 of suspension 20 only an amount of air that does not exceed a maximum predetermined pressure is kept, for example 1-2 bar. If bellows pad 21, at rest, is stressed and pressure increases, bleed valve 27 discharges immediately the air in excess in order not to change substantially the load distribution, bringing it back substantially to the original values. Owing to valve 27, the air that remains in bellows pad 21 when it does not push on the axle 5 avoids that bellows pad 21 collapses and is subject to quick wear.

In the absence of bleed valve 27, bellows pad 21 may be of semi-rigid type (TORPLEX® ), and would not be worn even when it is fully collapsed. In this case, valve 24 in the second position send directly air into atmosphere.

The device 20 for variation of the load distribution according to the invention can be made, mounted and used very easily. In fact, the problem of distribution of the load is encompassed and the grip of the wheels of the driven axle 5 rise when the truck goes uphill or on slippery paths.

Owing to the air suspension 20 according to the invention, on axle 5 the additional weight is less than double, as instead with the hydraulic devices already known, and part of the load is in any case supported by the other axle 6, also in presence of discontinuity of the ground. This is due to relatively soft pneumatic bellows pad 21 that communicates with reservoir 26.

This way, the differential gear 13 of axle 6 never operates completely unloaded, as can occur with the hydraulic devices in presence of bumps, but wheels 17 always rotate like the wheels of axle 5, even if with less load on them. A loadless operating, that is characterised by intermittent contacts with the ground that owing to the inertia of the wheels would wear quickly the differential gear up to breakage, cannot occur with pneumatic suspension 20 according to the invention.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A method for variation of the load distribution on driving wheels of operating vehicles, said operating vehicles comprising a driving unit, a frame and a first and a second driven axle coupled as a tandem group through resilient suspensions connected to the frame,
**characterised in that**
between said first driven axle and the frame at least a pneumatic suspension is arranged communicating with a reservoir of pressurised air, the pressure in the pneumatic suspension loading said first axle and unloading in part said second axle, transferring thus on said first axle part of the load that is born by said second axle, said reservoir of pressurised air absorbing pressure peaks in the suspension in presence of load peaks on said first axle.

2. Method for variation of the load distribution according to claim 1, wherein said first axle is the front axle of said tandem of driven axles.

3. Method for variation of the load distribution according to claim 1, wherein said first axle has centrally a box with a differential gear, said pneumatic suspension being arranged centred between said box of the differential gear of the first axle and said frame.

4. Method for variation of the load distribution according to claim 1, wherein said reservoir of pressurised air is shared by other servomechanisms of the vehicle, the ratio between the volume of said pneumatic suspension and said reservoir being set between 1/20 and 1/40.

5. Method for variation of the load distribution according to claim 1, wherein said reservoir of pressurised air is connected to said pneumatic suspension by means of a circuit with valves operated by the driver that connect selectively said suspension with said reservoir or with an air bleed valve, said circuit having ducts of diameter sufficient to allow a quick passage of air from said suspension to said reservoir.

6. A device for variation of the load distribution on driving wheels of operating vehicles, said operating vehicles comprising a driving unit, a frame and a first and a second driven axle coupled as a tandem group through resilient suspensions connected to the frame, comprising:
- at least a pneumatic suspension arranged between said first axle and the frame;
- at least a reservoir of pressurised air,
- a pneumatic circuit with valve means for carrying out a pneumatic connection of said suspension and said reservoir, said valve being movable between a first position wherein said suspension is in communication with said reservoir and a second position wherein said suspension is separated from said reservoir.

7. Device for variation of the load distribution according to claim 1, wherein said first axle is the front axle of the tandem.

8. Device for variation of the load distribution according to claim 6, wherein said suspension is a pneumatic bellows pad.

9. Device for variation of the load distribution according to claim 6, wherein said reservoir of pressurised air is the same reservoir that feeds other servomechanisms of the vehicle, the ratio between the volume of said bellows pad and said reservoir being set between 1/20 and 1/40.

10. Device for variation of the load distribution according to claim 6, wherein said pneumatic circuit comprises a bleed valve that allows outlet of air when said valve is in said second position and keeps in said suspension an amount of air that does not exceed a maximum predetermined pressure.
